# NEUE EUROPÄISCHE PATENTSCHRIFT

(11) **EP 0 787 425 B2**
(45) Veröffentlichungstag und Bekanntmachung des Hinweises auf die Entscheidung über den Einspruch: **20.10.2004**
(45) Hinweis auf die Patenterteilung: 31.10.2001
(21) Anmeldenummer: 97100731.5
(22) Anmeldetag: 17.01.1997
(51) Int. Cl.: A01D 43/08

(54) **Häckselmaschine und Fördervorrichtung**
Chopper and conveying device
Hacheuse et dispositif convoyeur

(30) Priorität: 03.02.1996 DE 19603928
(43) Veröffentlichungstag der Anmeldung: 06.08.1997
(73) Patentinhaber: DEERE & COMPANY, Moline, Illinois 61265-8098 (US)
(72) Erfinder: Bramstedt, Gerd, 66482 Zweibrücken (DE); Lipiceanu, Peter, 66482 Zweibrücken (DE)
(74) Vertreter: Magin, Ludwig Bernhard

(56) Entgegenhaltungen:
- EP-A- 0 242 718
- EP-A- 0 492 273
- DE-A- 3 234 657
- DE-A- 3 313 673
- DE-A- 3 535 620
- DE-A- 3 727 156
- DE-A- 4 406 304
- DE-AD- 4 215 696
- DE-C2- 19 603 928
- DE-U- 8 302 422
- FR-A- 2 533 107
- FR-A- 2 539 950
- FR-A- 2 692 430
- Serviceinformation Claas Jaguar 880/860-695-682
- Prospekt Claas Jaguar 695 SL; Jaguar 690 SL; Jaguar 685 SL; Jaguar 682 SL; Jaguar 682 S
- Betriebsanleitung Jaguar 682 SL/S

## Beschreibung

Die Erfindung betrifft eine Häckselmaschine gemäß des Oberbegriffs des Anspruchs 1. Eine derartige Häckselmaschine wird in dem Prospekt "Jaguar 695 SL, ... Jaguar 6825 der Fa. Claas in Verbindung mit ihre Service-Information vom 20. Juni 1994 offenbart.

Der Prospekt 8/95 (M+E) dt. 150/190.432.7 der Fa. CLAAS offenbart einen Feldhäcksler mit einem eine Häckseltrommel enthaltenden Häckselaggregat, das Erntegut wie Mais, Gras, Sorghum und dergleichen zerkleinert und es über einen Kanal einer Austragsvorrichtung zuführt, von wo aus es auf ein Begleitfahrzeug fliegt. In dem Kanal befindet sich neben einem Gebläse eine Gutbearbeitungsvorrichtung, die aus zwei parallelachsigen, gegenläufigen Walzen besteht, zwischen denen das Gut hindurchgeführt und dabei zerquetscht wird. Die Gutbearbeitungsvorrichtung ist in einer einzigen Einheit verwirklicht und kann als solche horizontal durch einen Ausschnitt in den Kanal eingeschoben oder aus diesem entfernt werden, wobei letzteres insbesondere für die Grassilage erfolgt.

Die EP-A2-0 244 892 offenbart ebenfalls eine Gutbearbeitungsvorrichtung mit zwei gegensinnig umlaufenden Walzen, die in einen Kanal eingebaut werden. Dabei kann die untere Walze auf Schwenkarmen aus dem Kanal herausgeschwenkt und durch eine Paddelwalze ersetzt werden. Diese Paddelwalze wirkt mit der verbleibenden auf der Außenfläche gezahnten Walze zusammen, um das Gut einem Gebläse zuzufördern. Auf diese Weise soll verhindert werden, daß beim Einsatz in der Grasernte die Gutbearbeitungsvorrichtung verstopft. Eine vergleichbare Lösung ist auch nach der FR-B1-25 39 950 vorgesehen.

Gemäß der EP-A1-0 242 718 kann in einen Kanal zwischen dem Häckselaggregat und der Austragsvorrichtung entweder eine Gutbearbeitungsvorrichtung oder eine Fördervorrichtung eingebaut werden. Es werden für die Gutbearbeitungsvorrichtung und die Fördervorrichtung aber unterschiedlich ausgebildete Kanäle verwendet. Aus diesem Grunde muß der gesamte Kanal gewechselt werden, falls ein Wechsel zwischen Fördervorrichtung und Gutbearbeitungsvorrichtung erfolgen soll.

Das der Erfindung zugrunde liegende Problem wird darin gesehen, die bekannte Häckselmaschine zu verbessen.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise kann abhängig von der geemteten Gutart entweder die Gutbearbeitungsvorrichtung oder die Fördervorrichtung Anwendung finden. Daneben bietet sich die Möglichkeit, den Kanal im Bereich seines Abschnitts durch eine Wand oder Gehäuse zu schließen. Da die Gutbearbeitungsvorrichtung nicht in dem Kanal verbleiben muß, führt sie nicht zu Verstopfungen und stumpft auch nicht ab. Die Fördervorrichtung hingegen kann hinsichtlich ihrer Abmessungen auf die gesamte Kanalbreite und -höhe abgestellt werden und somit die höchstmögliche Förderwirkung erzielen. Der Ein- und Ausbau ist sehr einfach, da die Fördervorrichtung und die Gutbearbeitungsvorrichtung in denselben Ausschnitt des Kanals eingefügt werden, was sowohl horizontal als auch vertikal oder in einer dazwischen liegenden Richtung möglich ist. Da die Fördervorrichtung, d. h. deren Gehäuse samt einer darin gelagerten Förderwalze, Lagern und dergleichen an die Gutbearbeitungsvorrichtung anschließbar ist, und zwar insbesondere mit Schnellanschlußmitteln wie Bolzen, Steckstiften, Hakenschlössern und dergleichen, kann sie infolge einer Verlagerung der Gutbearbeitungsvorrichtung gleichzeitig mitverstellt werden. Während also die Gutbearbeitungsvorrichtung z. B. aus dem Kanal herausgezogen wird, gleitet die Fördervorrichtung in den Kanal hinein und umgekehrt; es bedarf mithin nicht zweier getrennter Handhabungen. Es bedeutet auch, daß die Fördervorrichtung nicht ständig an der Gutbearbeitungsvorrichtung angeschlossen sein muß, da dies evtl. den Nachteil hätte, daß sie im eingebauten Zustand der Gutbearbeitungsvorrichtung hinderlich wäre, z. B. nach unten über den Kanal überstände und somit die Bodenfreiheit der Häckselmaschine verringern würde.

Wenn sowohl die Fördervorrichtung als auch die Gutbearbeitungsvorrichtung mittels derselben Antriebsvorrichtung, d. h. insbesondere mittels desselben Riemens oder Kette angetrieben wird, bedarf es keiner zusätzlichen oder anderen Antriebsmittel. Es ist somit einfach ein Riemen oder eine Kette von einer Scheibe oder einem Rad einer Vorrichtung zu demontieren und auf die Scheibe bzw. das Rad der anderen Vorrichtung aufzulegen, erforderlichenfalls unter Verwendung einer Spannvorrichtung.

Zwar könnte die Förderwalze in vielfältiger Weise ausgebildet werden, z. B. als Walze mit einer Vielzahl von Fächern auf der Umfangsfläche oder als Zinkenförderer; eine sehr einfache und günstig herzustellende und dennoch sehr wirksame Bauweise wird durch die Aufsetzung zweier radial oder im wesentlichen radial verlaufender insbesondere paddelförmiger Mitnehmer gewonnen, wobei die Mitnehmer aus Winkelblechen oder abgekröpften Winkelblechen bestehen könnten, die auf einer Welle aufgeschweißt, aufgeschraubt oder sonstwie befestigt sind.

Wenn der Kanal im eingebauten Zustand der Fördervorrichtung durch eine Klappe oder Deckel verschließbar ist, ist die Fördervorrichtung für Wartungszwecke jederzeit zugänglich. Eine derartige Klappe kann gegebenenfalls auch für die Gutbearbeitungsvorrichtung verwendet werden.

Anstatt der Klappe kann der Kanal auch durch einen Teil des die Fördervorrichtung aufnehmenden Gestells oder Gehäuses verschlossen werden.

Eine in sich geschlossene Fördervorrichtung kann auch als Bausatz nachträglich an Häckselmaschinen angebaut werden, die entweder bereits eine Gutbearbeitungsvorrichtung enthalten, an deren Stelle die Fördervorrichtung gesetzt werden kann oder in deren Kanal ein entsprechender Ausschnitt zur Aufnahme der Förder- und der Gutbearbeitungsvorrichtung eingearbeitet werden kann.

In der Zeichnung ist ein nachfolgend näher beschriebenes Ausführungsbeispiel der Erfindung dargestellt. Es zeigt:
- Fig. 1: eine Häckselmaschine in schematischer Darstellung und Seitenansicht,
- Fig. 2: ein Häckselaggregat, eine Austragsvorrichtung und einen dazwischen angeordneten Kanal mit einer Gutbearbeitungsvorrichtung in schematischer Darstellung und Seitenansicht bei demontierter linker Seitenwand,
- Fig. 3: denselben Bereich der Häckselmaschine in derselben Darstellung allerdings mit einer Fördervorrichtung anstelle der Gutbearbeitungsvorrichtung und
- Fig. 4: denselben Bereich der Häckselmaschine in derselben Darstellung mit der Gutbearbeitungsvorrichtung und der an sie angeschlossenen Fördervorrichtung.

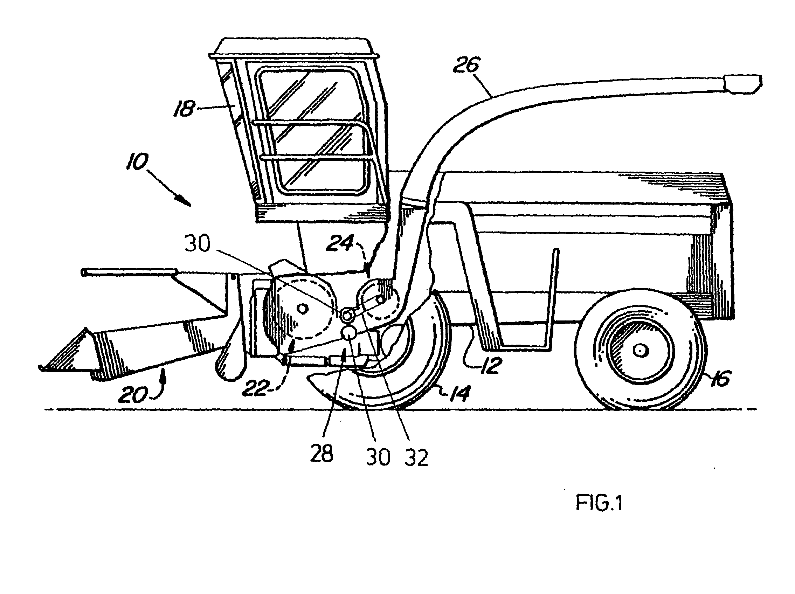

Eine in Figur 1 gezeigte Häckselmaschine 10 in der Art eines selbstfahrenden Feldhäckslers baut sich auf einem Rahmen 12 auf, der von vorderen und rückwärtigen Rädern 14 und 16 getragen wird. Die Bedienung der Häckselmaschine 10 erfolgt von einer Fahrerkabine 18 aus, von der aus eine Erntegutaufnahmevorrichtung 20 einsehbar ist. Mittels der Erntegutaufnahmevorrichtung 20 vom Boden aufgenommenes Gut, z. B. Mais, Gras oder dergleichen wird einem Häckselaggregat 22 zugeführt, das es in kleine Stücke häckselt und es einem Förderer 24 aufgibt. Das Gut verläßt die Häckselmaschine 10 zu einem nebenher fahrenden Anhänger über eine drehbare Austragsvorrichtung 26. Zwischen dem Häckselaggregat 22 und dem Förderer 24 befindet sich eine Gutbearbeitungsvorrichtung 28, durch die das zu fördernde Gut dem Förderer 24 zugeführt wird. Weitere Einzelheiten der Häckselmaschine 10 bedürfen keiner Beschreibung, weil diese an sich bekannt ist. Die Lage der Gutbearbeitungsvorrichtung 28 ist jedoch nicht entscheidend, so daß sie auch stromabwärts des Förderers 24 vorgesehen werden kann.

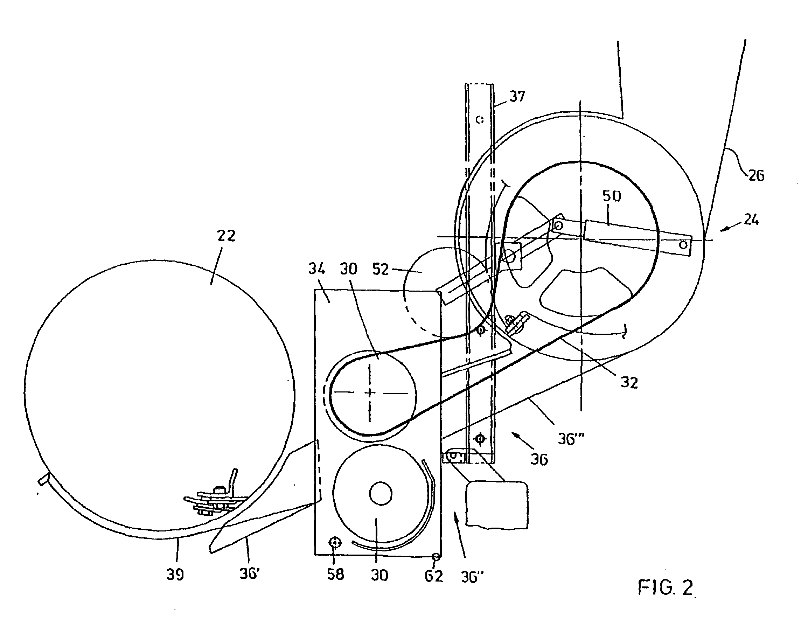

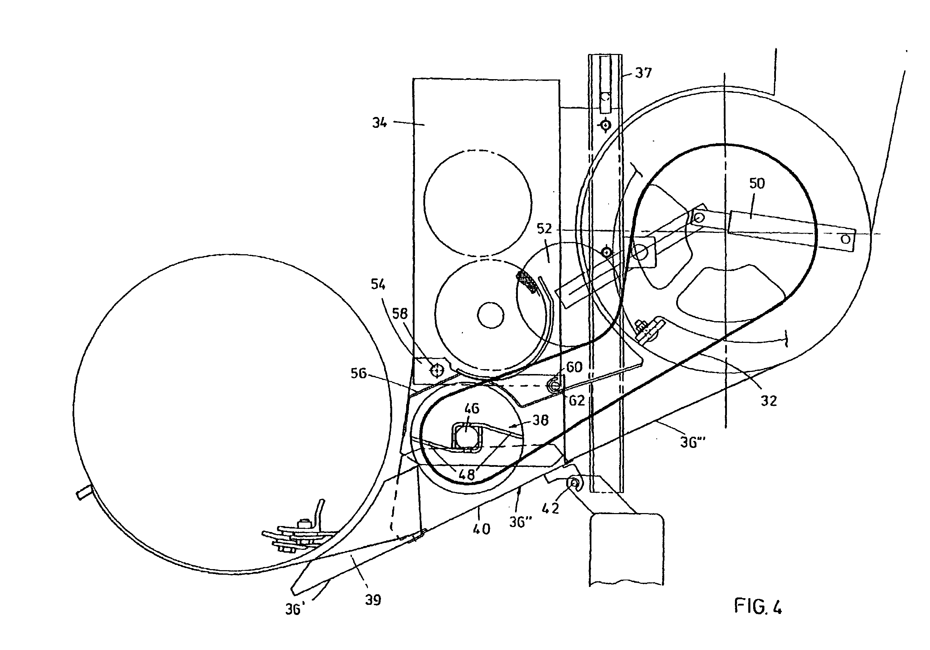

Die Gutbearbeitungsvorrichtung 28 enthält gemäß den Figuren 1, 2 und 4 zwei gewöhnlich in paarweiser Anordnung vorliegende Walzen 30, die auf ihrer Mantelfläche eine scharfkantige Kantenprofilierung aufweisen, wie dies bekannt ist. Beide Walzen 30 werden normalerweise mit geringfügig unterschiedlichen Drehzahlen angetrieben, wozu sich ein in den Antriebsmitteln enthaltenes Zugmittel 32 von der oberen Walze 30 zu dem Förderer 24 und ein weiteres nicht gezeigtes Zugmittel in S-förmigem Verlauf um ebenfalls nicht gezeigte Scheiben oder Räder auf den Wellen der Walzen 30 erstreckt. Mit Blick auf die Zeichnung dreht ein Rotor des Förderers 24 und die obere Walze 30 entgegen dem Uhrzeigerdrehsinn und befördern auf diese Weise das von dem Häckselaggregat 22 abgegebene Erntegut durch die Austragsvorrichtung 26 aus der Häckselmaschine 10. Beide Walzen 30 sind übereinander angeordnet und in nicht gezeigten Lagern drehbar in einem Gehäuse 34 aufgenommen. Das Gehäuse 34 durchbricht einen sich von dem Häckselaggregat 22 zu dem Förderer 24 bzw. der Austragsvorrichtung 26 erstrekkenden Kanal 36, der an vier Seiten geschlossen ist und das zerkleinerte Erntegut leitet, und ist an seiner Unterseite geschlossen. Die als eine gesamtheitliche Komponente ausgebildete und in dem Gehäuse 34 untergebrachte Gutbearbeitungsvorrichtung 28 ist in Schienen 37 vertikal beweglich gelagert, wie dies von den JOHN DEERE Feldhäckslern der Typen 6610 - 6910 bekannt ist, und kann somit insbesondere mittels eines Seilzugs in eine in den Figuren 1 und 2 gezeigte Bearbeitungsstellung hauptsächlich für die Maisernte oder in eine in Figur 4 gezeigte Ruhestellung hauptsächlich für die Grasernte gebracht werden. Die Schienen 37 sind seitlich an den Kanal 36 starr angebracht.

Der Kanal 36 läßt sich in drei Abschnitte untergliedern, und zwar einen vorderen, einen mittleren und einen rückwärtigen 36', 36" und 36"'.

Der vordere Abschnitt 36' schließt starr oder beweglich an das Häckselaggregat 22 an und stellt im wesentlichen eine Fortsetzung der dieses umgebenden Wandungen dar. Ein Blech 39 erstreckt sich durch den vorderen Abschnitt 36' bis zu der Vorderseite des Gehäuses 34, um das Gut optimal zu leiten.

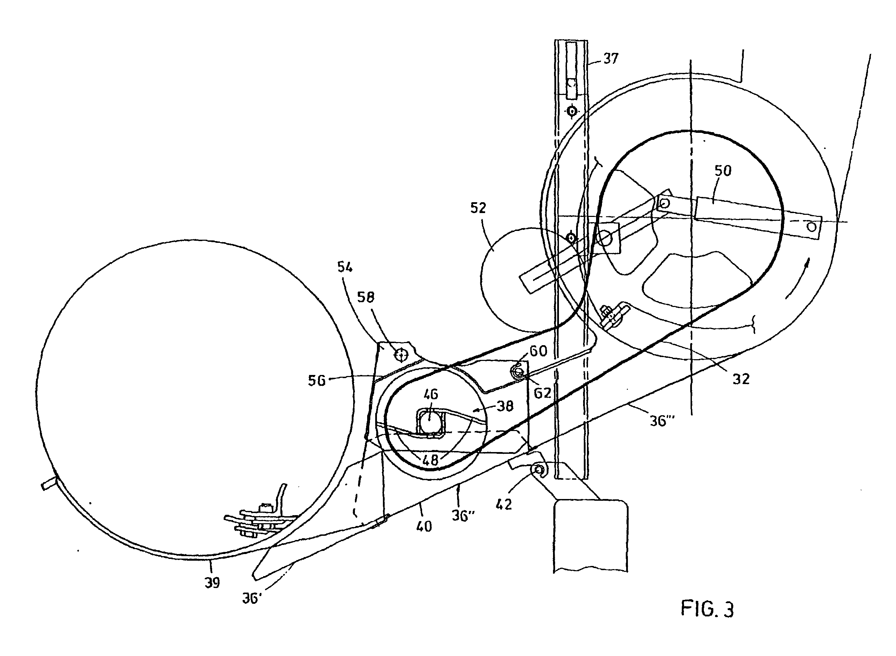

Der mittlere Abschnitt 36" kann wahlweise von einem nicht gezeigten einzufügenden Blechgehäuse, der Gutbearbeitungsvorrichtung 28 oder einer Fördervorrichtung 38 gebildet werden. Je nach der Ausbildung des mittleren Abschnitts 36'' kann in seinem Bereich die Unterseite des Kanals 36 mit einer Klappe 40 verschlossen werden, die um ein Gelenk 42 an dem rückwärtigen Abschnitt 36''' oder an dem Rahmen 12 vertikal schwenkbar befestigt werden kann und in einer oberen Stellung, wie sie aus den Figuren 3 und 4 hervorgeht, den Kanal 36 von unten her schließt.

Der rückwärtige Abschnitt 36''' ist direkt an einen Schacht 44 der Austragsvorrichtung 26 angeschlossen und geht in dessen Wandungen stufenlos über.

Die Abschnitte 36' und 36''' können einzelne verschiebbare Blechteile enthalten, die zum Ein- oder Ausbau der Förder- oder der Gutbearbeitungsvorrichtung 38 oder 28 an diese anlegbar sind, um einen evtl. bestehenden Spalt zu schließen. Außerdem können diese Abschnitte 36', 36''' an den dem Abschnitt 36" zugelegenen Stirnflächen mit Flanschen versehen sein, die sich in der Einschubrichtung der Förder- oder der Gutbearbeitungsvorrichtung 38 oder 28 erstrecken und eine andere Befestigung bzw. Abdichtung erlauben. Derartige Ausbildungen der Abschnitte 36' und 36''' sind insbesondere dann sinnvoll, wenn auch vorgesehen ist, anstatt der Förder- oder der Gutbearbeitungsvorrichtung 38 oder 28 lediglich ein Blechgehäuse in den Ausschnitt des mittleren Abschnitts 36' einzufügen.

Mit Blick auf Figur 3 ist die Fördervorrichtung 38 zu erkennen, die sich in diesem Ausführungsbeispiel aus einer sich quer zu der Gutflußrichtung erstreckenden, horizontalen Welle 46 und aus zwei Mitnehmern 48 zusammensetzt. Die als Paddel ausgebildeten Mitnehmer 48 sind jeweils aus einem Winkelblech geformt, das mit seinem Winkelbereich die Welle 46 übergreift und an dieser befestigt ist und in seinem verbleibenden Bereich leicht nachlaufend abgekröpft ist. Die radial außenliegenden Endbereiche der Mitnehmer 48 berühren beim Umlaufen nahezu den Boden des Kanals 36, in diesem Fall die Oberfläche der Klappe 40. Anstatt der paddelförmigen Ausbildung können die Mitnehmer 48 auch aus federnden oder starren Zinken, Schlegeln oder dergleichen gebildet werden.

In Figur 3 ist auch das Zugmittel 32 aufgenommen, wobei aus seinem Verlauf deutlich wird, daß die Fördervorrichtung 38 unterschlächtig fördert. Das Zugmittel 32 wird mittels einer von einem Hydraulikmotor 50 betätigten Spannrolle 52 ausreichend fest an die jeweiligen nicht gezeigten Scheiben angelegt. Die Fördervorrichtung 38 enthält Seitenwände 54 mit nicht gezeigten Lagern zur drehbaren Aufnahme der Welle 46 und ein die Seitenwände 54 verbindendes Deckblech 56, das teils dem Umfangsverlauf des von den Mitnehmern 48 beschriebenen Zylinders folgt und anderenteils sich in der Richtung des rückwärtigen Abschnitts 36''' erstreckt. Allerdings kann die Fördervorrichtung 38 auch so ausgebildet und angetrieben werden, daß sie oberschlächtig fördert. In diesem Falle müßte das Zugmittel 32 S-förmig aufgelegt, ein Umkehrtrieb vorgesehen oder ein sechskantiger Riemen mit seiner Rückseite zum Antrieb benutzt werden.

Anstelle der Klappe 40 kann zum Verschließen des Bodenbereichs des Kanals 36 in dem Abschnitt 36' auch ein Verbindungs- oder Bodenblech zwischen den Seitenwänden 54 vorgesehen werden. In diesem Fall würden die Seitenwände 54, das Deckblech 56 und das evtl. Verbindungs- oder Bodenblech ein- und ausgangsseitig dem Kanalquerschnitt folgen. Im Falle der oberschlächtigen Förderung der Fördervorrichtung 38 könnte evtl. auf die Klappe 40 wie auch auf das Verbindungsoder Bodenblech verzichtet werden.

In den vorderen, oberen Eckbereichen der Seitenwände 54 der Fördervorrichtung 38 ist jeweils eine Bohrung 58 vorgesehen, die mit einer entsprechenden, verdeckten Bohrung in dem Gehäuse 34 der Gutbearbeitungsvorrichtung 28 in Deckung gebracht werden kann und wobei beide Bohrungen 58 geeignet und bestimmt sind, nicht gezeigte Bolzen zum Anschluß der Seitenwände 54 an das Gehäuse 34 aufzunehmen. Zwischen den rückwärtigen oberen Eckbereichen der Seitenwände 54 erstreckt sich eine Leiste 60 mit einem U-Profil, das sich nach hinten (in Figur 3 und 4 nach rechts) öffnet und einen an der Unterseite des Gehäuses 34 angebrachten und sich horizontal erstreckenden Halter in der Form einer Stange 62 übergreift. Anstatt einer derartigen Leiste 60, die einen sicheren Anschluß der Fördervorrichtung 38 an den rückwärtigen Abschnitt 36''' gewährleistet, können auch auf jeder Seite der Fördervorrichtung 38 Haken oder Ösen gleichen Profils angebracht werden, die in gleicher Weise auf den Halter 62 aufsetzbar sind. Selbstverständlich sind auch andere Verbindungsmittel möglich.

Da der Anbau der Fördervorrichtung 38 auch dann möglich ist, wenn keine Gutbearbeitungsvorrichtung 28 verwendet wird, kann deren Befestigung derart erfolgen, daß die Stange 62 und die die Bohrungen 58 durchdringenden Stifte nicht an dem Gehäuse 34 der Gutbearbeitungsvorrichtung 28 sondern in entsprechenden Ausnehmungen an dem Rahmen 12 oder den Abschnitten 36' bzw. 36''' festgemacht werden.

Aus der bisherigen Beschreibung geht somit hervor, daß der mittlere Abschnitt 36" des Kanals 36 einen Ausschnitt darstellt, in den sowohl die Gutbearbeitungsvorrichtung 28 als auch die Fördervorrichtung 38 eingesetzt werden kann. Weiterhin kann die Fördervorrichtung 38 an die Unterseite der Gutbearbeitungsvorrichtung 28 angeschlossen und die Gutbearbeitungsvorrichtung 28 in den Schienen 37 vertikal zwischen der Bearbeitungs- und der Ruhestellung verfahren werden, und zwar sowohl ohne als auch mit der Fördervorrichtung 38.

Den Anbau bzw. das Einsetzen der Fördervorrichtung 38 in den mittleren Abschnitt 36" wird im folgenden anhand der Figur 4 erläutert, wobei ergänzend auf die Figuren 2 und 3 verwiesen wird.

In der Bearbeitungsstellung der Gutbearbeitungsvorrichtung 28, d. h. wenn sie sich im mittleren Abschnitt 36" befindet, ragt sie mit einem Teil des Gehäuses 34 und der unteren Walze 30 nach unten über den Kanal 36 hinaus und steht über das Zugmittel 32 mit dem Förderer 24 in Antriebsverbindung. Die Gutbearbeitungsvorrichtung 28 wird in jeder ihrer Stellungen mittels nicht gezeigter Steckstifte oder reibschlüssiger Klemmittel an den Schienen 37 gehalten. Die Klappe 40 ist in der Bearbeitungsstellung der Gutbearbeitungsvorrichtung 28 nicht montiert, da der Kanal 36 nach unten von dem Gehäuse 34 der Gutbearbeitungsvorrichtung 28 verschlossen ist.

Zur Montage der Fördervorrichtung 38 wird-sofern sie nicht getrennt von der Gutbearbeitungsvorrichtung angebaut wird - diese zum Positionieren mit der Leiste 60 auf den Halter 62 aufgesetzt und um diesen im Uhrzeigerdrehsinn nach oben verschwenkt, bis sich die Bohrungen 58 decken, so daß ein Bolzen oder dergleichen in diese eingesetzt werden kann. Anschließend wird das Zugmittel 32, also ein Riemen oder eine Kette, von der oberen Walze 30 genommen, nachdem zuvor die Spannrolle 52 drucklos gemacht wurde. Danach wird die Gutbearbeitungsvorrichtung 28 aus ihrer Halterung gelöst und mit der an sie angebauten Fördervorrichtung 38 in den Schienen 37 mittels eines Seiloder Kettenzugs nach oben bewegt. Dabei gelangt die Fördervorrichtung 38 in den mittleren Abschnitt 36''. Die Aufwärtsbewegung wird dann gestoppt, wenn die Fördervorrichtung 38 eine vorab festgelegte Stellung erreicht hat, in der sie die in Figur 4 dargestellte Lage einnimmt. In dieser Stellung wird die Fördervorrichtung 38 bzw. die Gutbearbeitungsvorrichtung 28 wiederum mit Bolzen oder Klemmitteln vorzugsweise in den Schienen 37 lagegesichert. In der Folge wird das Zugmittel 32 auf eine nicht gezeigte Scheibe oder ein Rad zum Antreiben der Welle 46 aufgelegt und die Spannrolle 52 wieder zur Anlage gebracht. Schließlich wird bei Verwendung der Klappe 40 diese in das Gelenk 42 eingehängt und im Uhrzeigerdrehsinn nach oben geschwenkt, bis sie an dem vorderer Abschnitt 36' anliegt, und dort mittels Bolzen oder einem sonstigen Arretiermittel gesichert. Nunmehr ist die Fördervorrichtung 38 betriebsbereit und kann das Erntegut, insbesondere Gras, von dem Häckselaggregat 22 annehmen und an den Förderer 24 weitergeben.

Nach einer weiteren Ausgestaltung kann die Klappe 40 auch mit dem vorderen Abschnitt 36' starr oder insbesondere über einen Kniehebel gelenkig verbunden werden und gemeinsam montiert bzw. demontiert werden, was je nach der Verwendung einen noch besseren Zugang z. B. zu Nachschneidesieben stromabwärts des Häckselaggregats 22 ermöglicht.

## Patentansprüche

1. Häckselmaschine (10) mit einer Gutbearbeitungsvorrichtung (28), einer Fördervorrichtung (38), einem Häckselaggregat (22) und einer Austragsvorrichtung (26), wobei das Häckselaggregat (22) und die Austragsvorrichtung (26) über einen Kanal (36) miteinander verbunden sind, in den die Gutbearbeitungsvorrichtung (28) oder die Fördervorrichtung (38) einfügbar ist, die Fördervorrichtung (38) in einem ersten Gehäuse angeordnet ist, die Gutbearbeitungsvorrichtung (28) in einem zweiten Gehäuse (34) angeordnet ist, und das erste Gehäuse anstelle des zweiten Gehäuses (34) und umgekehrt quer zur Förderrichtung in einen Abschnitt (36") des Kanals (36) einfügbar ist, **dadurch gekennzeichnet, daß** die Fördervorrichtung (38) an die Gutbearbeitungsvorrichtung (28) anschließbar ist.

2. Häckselmaschine nach Anspruch 1, **dadurch gekennzeichnet, daß** die Fördervorrichtung (38) und die Gutbearbeitungsvorrichtung (28) mittels derselben Antriebsmittel angetrieben werden.

3. Häckselmaschine nach einem oder mehreren der vorherigen Ansprüche, **dadurch gekennzeichnet, daß** die Fördervorrichtung (38) eine Förderwalze mit wenigstens zwei im wesentlichen radial verlaufenden Mitnehmern (48), insbesondere Paddeln, enthält.

4. Häckselmaschine nach einem oder mehreren der vorherigen Ansprüche, **dadurch gekennzeichnet, daß** ein Wandbereich des Kanals (36) bei eingebauter Fördervorrichtung (38) von einer Klappe (40) verschließbar ist.

5. Häckselmaschine nach einem oder mehreren der vorherigen Ansprüche 1 bis 3, **dadurch gekennzeichnet, daß** die Fördervorrichtung (38) Seitenwände (54) und diese verbindende Deck- und Bodenbleche (58) enthält, die ein- und ausgangsseitig an die Abschnitte (36') und (36''') anschließen.

6. Häckselmaschine nach einem oder mehreren der vorherigen Ansprüche, **dadurch gekennzeichnet, daß** die Fördervorrichtung (38) mittels Schnellverschlußelementen an die Gutbearbeitungsvorrichtung (28) anschließbar ist.

7. Häckselmaschine nach einem oder mehreren der vorherigen Ansprüche, **dadurch gekennzeichnet, daß** die Gutbearbeitungsvorrichtung (28) in Schienen (37) beweglich gelagert ist, wobei sich die Schienen (37) vorzugsweise quer zu der Gutflußrichtung erstrecken.

8. Häckselmaschine nach einem oder mehreren der vorherigen Ansprüche, **dadurch gekennzeichnet, daß** die Fördervorrichtung (38) insbesondere eine Leiste (60) aufweist, um sie an einen Halter (62) an der Gutbearbeitungsvorrichtung (28) aufhängen zu können.

9. Häckselmaschine nach einem oder mehreren der Ansprüche 4 bis 8, **dadurch gekennzeichnet, daß** die Klappe (40) mit dem vorderen Abschnitt (36') starr oder insbesondere über einen Kniehebel gelenkig verbunden und lösbar angebracht ist.

## Claims

1. A chopping machine (10) with a crop processing device (28), a conveyor device (38), a chopper assembly (22) and a discharge device (26), wherein the chopper assembly (22) and the discharge device (26) are connected together through a duct (36), into which the crop processing device (28) or the conveyor device (38) can be introduced, the conveyor device (38) is arranged in a first housing, the crop processing device (28) is arranged in a second housing (34) and the first housing can be introduced transverse to the conveying direction into a section (36") of the duct (36) in place of the second housing (34) and conversely, **characterized in that** the conveyor device (38) can be attached to the crop processing device (28).

2. A chopping machine according to claim 1, **characterized in that** the conveyor device (38) and the crop processing device (28) are driven by means of the same drive means.

3. A chopping machine according to one or more of the preceding claims, **characterized in that** the conveyor device (38) includes a feed roll with at least two entraining members (48), especially paddles, running substantially radially.

4. A chopping machine according to one or more of the preceding claims, **characterized in that** a wall region of the duct (36) can be closed by a flap (40) with the conveyor device (38) installed.

5. A chopping machine according to one or more of the preceding claims 1 to 3, **characterized in that** the conveyor device (38) includes sidewalls (54) and cover and bottom plates (56) connecting these and adjoining the sections (36') and (36") on the inlet side and outlet side.

6. A chopping machine according to one or more of the preceding claims, **characterized in that** the conveyor device (38) can be attached to the crop processing device (28) by means of quick release elements.

7. A chopping machine according to one or more of the preceding claims, **characterized in that** the crop processing device (28) is mounted movably in rails (37), wherein the rails (37) preferably extend transverse to the crop flow direction.

8. A chopping machine according to one or more of the preceding claims, **characterized in that** the conveyor device (38) in particular comprises a strap (60) in order to enable it to be suspended on a retainer (62) on the crop processing device (28).

9. A chopping machine according to one or more of claims 4 to 8, **characterized in that** the flap (40) is connected to the front section (36') rigidly or especially articulated by means of a toggle lever and is fitted releasably.

## Revendications

1. Hacheuse (10) portant un dispositif (28) de traitement de la matière, un dispositif convoyeur (38), une unité de hachage (22) et un dispositif d'évacuation (26), l'unité de hachage (22) et le dispositif d'évacuation (26) étant reliés entre eux par l'intermédiaire d'un conduit (36), dans lequel peut être inséré le dispositif (28) de traitement de la matière ou le dispositif de convoyage (38), le dispositif de convoyage (38) étant disposé dans un premier carter, le dispositif (28) de traitement de la matière étant disposé dans un second carter (34) et le premier carter pouvant être inséré, à la place du second carter (34) et inversement, transversalement par rapport à la direction de convoyage, dans une partie (36") du conduit (36), **caractérisée en ce que** le dispositif de convoyage (38) peut être raccordé au dispositif de traitement de la matière (28).

2. Hacheuse selon la revendication 1, **caractérisée en ce que** le dispositif de convoyage (38) et le dispositif (28) de traitement de la récolte sont entraînés à l'aide des mêmes moyens d'entraînement.

3. Hacheuse selon une ou plusieurs des revendications précédentes, **caractérisée en ce que** le dispositif de convoyage (38) contient un cylindre de convoyage comportant au moins deux organes d'entraînement (48), notamment des palettes, qui s'étendent sensiblement radialement.

4. Hacheuse selon une ou plusieurs des revendications précédentes, **caractérisée en ce qu'**un élément de paroi du conduit (36) peut être fermé par un volet (40) lorsque le dispositif de convoyage (38) est monté.

5. Hacheuse selon une ou plusieurs des revendications précédentes 1 à 3, **caractérisée en ce que** le dispositif de convoyage (38) contient des parois latérales (54) et des tôles de plafond et de plancher (48) qui relient ces parois latérales et qui se raccordent côté entrée et côté sortie aux parties (36' et 36").

6. Hacheuse selon une ou plusieurs des revendications précédentes, **caractérisée en ce que** le dispositif de convoyage (38) peut être raccordé à l'aide d'éléments de fermeture rapide au dispositif (28) de traitement de la matière.

7. Hacheuse elon une ou plusieurs des revendications précédentes, **caractérisée en ce que** le dispositif (28) de traitement de la matière est monté de manière à être déplaçable sur des rails (37), les rails (37) s'étendant de préférence transversalement par rapport à la

8. Hacheuse selon une ou plusieurs des revendications précédentes, **caractérisée en ce que** le dispositif de convoyage (38) possède notamment une barrette (60) afin de pouvoir être suspendu à un support (62) sur le dispositif (28) de traitement de la matière.

9. Hacheuse selon une ou plusieurs des revendications 4 à 8, **caractérisée en ce que** le volet (40) est relié rigidement ou notamment d'une manière articulée par l'intermédiaire d'un levier à genouillère et est fixé de façon amovible à la partie avant (36').
